# EUROPÄISCHE PATENTSCHRIFT

(11) **EP 1 170 406 B1**
(45) Veröffentlichungstag und Bekanntmachung des Hinweises auf die Patenterteilung: **09.01.2008**
(21) Anmeldenummer: 00114257.9
(22) Anmeldetag: 04.07.2000
(51) Int. Cl.: D01D 5/253, A01D 34/416, A63B 51/02, B29C 53/14

(54) **Verfahren zum Herstellen eines Monofilaments und Verwendung desselben**
Process for the production of a monofilament and use thereof
Procédé pour la fabrication d'un monofilament et son utilisation

(43) Veröffentlichungstag der Anmeldung: 09.01.2002
(73) Patentinhaber: Bloch, Klaus, D-53757 Sankt Augustin (DE)
(72) Erfinder: Bloch, Klaus, D-53757 Sankt Augustin (DE)
(74) Vertreter: Müller-Gerbes, Margot

(56) Entgegenhaltungen:
- WO-A-97/10374
- DE-A- 2 262 480
- DE-A- 19 651 904
- DE-A- 19 744 780
- DE-C- 4 005 879
- PATENT ABSTRACTS OF JAPAN vol. 013, no. 036 (M-790), 26. Januar 1989 (1989-01-26) & JP 63 246226 A (DAINICHI SEIKAN KK), 13. Oktober 1988 (1988-10-13)
- PATENT ABSTRACTS OF JAPAN vol. 013, no. 039 (C-563), 27. Januar 1989 (1989-01-27) & JP 63 235515 A (AKIYUKI SHIMA), 30. September 1988 (1988-09-30)
- Franz Fourné: "Synthetische Fasern", Carl Hanser Verlag, München (1995), S. 196, 197, 201, 202
- B. von Falkai: "Synthesefasern"; Verlag Chemie, Weinheim (DE); 1981, S. 138, 143

## Beschreibung

Die Erfindung betrifft ein Verfahren zum Herstellen eines Monofilaments aus einem extrudierbaren und verstreckbaren thermoplastischen Kunststoff mit einem Grundquerschitt und mindestens einem in Längserstreckung des Monofilaments auf dessen Oberfläche wendelförmig umlaufenden Wulst. Die Erfindung betrifft ferner die Verwendung der nach dem angegebenen Verfahren hergestellten Monofilamente.

Monofilamente der eingangs genannten Art mit einem wendelförmig umlaufenden Wulst sind beispielsweise aus der DE 40 05 879 C1 zur Verwendung als Mähfaden für Freischneidegeräte bekannt. Der wendelförmig umlaufende Wulst soll bei dem bekannten als Mähfaden eingesetzten Monofilament zur Geräuschminderung beitragen, wenn dieses an einem Freischneidegerät mit der üblichen hohen Drehzahl von bis zu 15 000/min betrieben wird. Allerdings läßt sich der Druckschrift nicht explizit entnehmen, wie ein solcher Mähfaden mit wendelförmig umlaufendem Wulst hergestellt werden kann. Generell erscheint es jedoch möglich, ein Monofilament mit wendelförmig umlaufendem Wulst durch eine Rotationsbewegung des das Monofilament formenden Werkzeuges der verwendeten Extrusionseinrichtung herzustellen. In einem solchen Fall kann jedoch keine für die Festigkeitseigenschaften wünschenswerte Verstreckung des Monofilaments mehr durchgeführt werden, da dann die wendelförmige Ausrichtung des Wulstes zum großen Teil wieder verlorengehen würde.

Aus der DE 196 51 904 A1 ist ein Inline-Verfahren bekannt geworden, bei dem ein mit einem vorbestimmten Querschnitt versehener Faden extrudiert und unmittelbar anschließend von einem Abzugssystem aufgenommen wird, welches um die Längsachse des Fadens rotiert und somit eine Verdrillung desselben bewirkt. Die mit diesem Verfahren hergestellten verdrillten Fäden sind jedoch nicht dauerhaft formbeständig und können auch nur einzeln, d. h. ein Faden pro Düse und Abzugssystem hergestellt werden. Damit steht aber der notwendige Anlagenaufwand einer kostengünstigen Massenproduktion entgegen.

Es ist ferner bekannt, die Oberfläche eines extrudierten Monofilaments durch Einbringen von schraubenlinienförmig umlaufenden Vertiefungen zu profilieren, wodurch ebenfalls eine höhere Oberflächenrauhigkeit und beispielsweise beim Einsatz als Mähfaden ein ruhigerer Lauf erreicht werden kann. Eine solche Oberflächenprofilierung in Form von Vertiefungen kann beispielsweise gemäß US 2,434,533 durch ein der Extrusionseinrichtung nachgeordnetes rotierendes Werkzeug erzeugt werden, welches beim Durchzug des Monofilaments die schraubenlinienförmigen Vertiefungen in die Oberfläche einprägt. Der wesentliche Nachteil von Monofilamenten mit einer Oberflächenprofilierung in Form von Vertiefungen ist jedoch, daß hierdurch eine erhebliche Kerbwirkung hervorgerufen wird, die die Festigkeit des erhaltenen Monofilaments sehr nachteilig beeinflußt.

Aus der EP 0 696 414 A1 ist es schließlich bekannt, ein extrudiertes Monofilament ohne Wulst, welches als Mähfaden für Freischneidegeräte Verwendung findet, mit einer Oberflächenprofilierung zu versehen, indem dieses Monofilament nach der Extrusion zunächst eingespannt wird, dann um seine Längsachse verdreht wird und anschließend durch Zufuhr von Wärme bleibend verformt wird. Ein solchermaßen um seine Längsachse gedrehtes Monofilament von vorzugsweise quadratischem Querschnitt weist sodann eine schraubenlinienförmige Oberflächenprofilierung auf. Nachteilig bei dem bekannten Verfahren ist es jedoch, daß das Monofilament in seiner Molekülstruktur durch das nach der Extrusion erfolgende Verdrehen und nachfolgende Erwärmen hohen mechanischen Belastungen ausgesetzt ist, die sich sehr nachteilig auf die Verschleißfestigkeit und Lebensdauer des erhaltenen Monofilaments auswirken. Ferner ist der Grad der erzielten Oberflächenprofilierung und der beispielsweise dadurch erzielbaren Verringerung der Geräuschentwicklung an einem Freischneidegerät verbesserungswürdig.

Die Erfindung hat sich daher die Aufgabe gestellt, ein Verfahren zum Herstellen eines Monofilaments der eingangs genannten Art vorzuschlagen, mit welchem derartige Monofilamente mit einer besonders hohen mechanischen Festigkeit bei geringem Anlagenaufwand herzustellen sind und mit einer an den jeweiligen Einsatzzweck einfach anpassbaren Oberflächenrauhigkeit infolge des wendelförmig umlaufenden Wulstes versehen werden können.

Diese Aufgabe wird erfindungsgemäß durch ein Verfahren gemäß Patentanspruch 1 gelöst, welches die folgenden Schritte umfaßt:
a. Extrudieren des Monofilaments mit geradlinigem Verlauf des mindestens einen Wulstes in Richtung der Längserstreckung des Monofilaments;
b. Verstrecken des Monofilaments um den Faktor 1 bis 10;
c. Verdrillen des erwärmten Monofilaments um seine Längsachse unter Ausbildung des wendelförmig umlaufenden Verlaufs des mindestens einen Wulstes, wobei das Verdrillen des verstreckten Monofilaments in einem separaten und von der Extrusion und Verstreckung desselben unabhängigen Arbeitsgang durchgeführt wird, und anschließend
d. Erwärmen des verstreckten Monofilaments auf eine Temperatur unterhalb der Schmelztemperatur des thermoplastischen Kunststoffes und nachfolgendes Abkühlen, wodurch eine Thermofixierung des verdrillten Monofilaments bewirkt wird.

Erfindungsgemäß wird somit zunächst ein Monofilament mit geradlinigem Verlauf des mindestens einen Wulstes in Richtung der Längserstreckung des Monofilaments hergestellt, was auf den bekannten Extrusionseinrichtungen zur Herstellung von Monofilamenten ohne größere bauliche Veränderungen problemlos möglich ist, da auf problematische Teile, wie beispielsweise drehbare Werkzeuge etc. verzichtet werden kann.

Nachfolgend kann ein solches Monofilament mit geradlinig verlaufenden Wulsten problemlos verstreckt werden, um dem Monofilament die gewünschten hohen Festigkeitseigenschaften zu verleihen.

Nach dem Extrudieren und Verstrecken des Monofilaments wird das Verdrillen des Monofilaments um seine Längsachse bewirkt, so daß der mindestens eine Wulst seinen wendelförmigen Verlauf erhält.

Erst im Anschluß an dieses Verdrillen wird sodann eine Erwärmung des Monofilaments auf eine Temperatur unterhalb der Schmelztemperatur des eingesetzten thermoplastischen Kunststoffes und eine nachfolgende Abkühlung vorgenommen, wodurch eine Thermofixierung bewirkt wird.

Aufgrund dieser Thermofixierung behält das Monofilament seine um die Längsachse verdrillte Gestalt mit wendelförmig umlaufendem Wulst bzw. mehreren solcher Wulste dauerhaft bei.

Es hat sich hierbei überraschenderweise gezeigt, daß durch das durchgeführte Erwärmen des verstreckten Monofilaments, d. h. die Thermofixierung, die Molekularstruktur des gestreckten Monofilaments durch das Verdrillen in keiner Weise gestört wird, so daß auch das um seine Längsachse verdrillte Monofilament die vorteilhaften Festigkeitseigenschaften des geradlinig in Längserstreckung verstreckten Monofilaments beibehält und somit auch das Endprodukt, d. h. das um seine Längsachse verdrillte Monofilament die vorteilhaften mechanischen Festigkeitswerte infolge der durchgeführten Verstreckung beibehält.

Die Abkühlung des zwecks Thermofixierung erwärmten Monofilaments kann durch Einsatz von Kühlmedien, wie Gebläseluft und/oder Kühlwasser etc. erfolgen.

Im Rahmen der Erfindung wurde gefunden, daß die Verdrillung des erwärmten Monofilaments um seine Längsachse vorteilhaft mittels einer an sich bekannten Faden-Zwirnmaschine durchgeführt werden kann, die beispielsweise nach dem sogenannten Doppeldrahtprinzip arbeiten kann und bisher besonders zur Herstellung von Seilgarn, Industriefaser, Bindegarn und Erntebindegarn sowie zum Verzwirnen von vorgezwirnten Garnen verwendet wird.

Erfindungsgemäß erfolgt das Verdrillen des verstreckten Monofilaments in einem separaten und von der Extrusion und Verstreckung desselben unabhängigen Arbeitsgang.

Vorteilhaft wird das Monofilament auf einem Meter seiner Längserstreckung zwanzig- bis zweihundertfach um seine Längsachse verdrillt, um den gewünschten wendelförmig umlaufenden Verlauf des mindestens einen Wulstes zu erhalten. Durch Variation des Verdrillgrades zwischen zwanzig- und zweihunderfach pro Meter Längserstreckung kann die Steigung des wendelförmig umlaufenden Wulstes in weiten Grenzen variiert werden und somit Einfluß auf die erhaltene Oberflächenrauhigkeit des Monofilaments infolge des wendelförmig umlaufenden Wulstes in Abhängigkeit vom Verwendungszweck genommen werden. Unter einer einfachen Verdrillung des Monofilaments um seine Längsachse wird im Sinne der Erfindung eine vollständige Rotation des Querschnittes des Monofilaments um 360° verstanden, d. h. bei einer zwanzigfachen Verdrillung wird das Monofilament auf einem Meter seiner Längserstreckung zwanzigmal um 360° um seine Längsachse verdreht.

Das Verstrecken des Monofilaments findet vorteilhaft bei einer mindestens 10°C unterhalb der Schmelztemperatur des thermoplastischen Kunststoffes liegenden Temperatur statt, um die gewünschten hohen Festigkeitswerte zu erhalten, beispielsweise bei einer Temperatur von 100 bis 220°C, wenn ein Monofilament auf Basis von Polyamid eingesetzt wird.

Um die Molekularstruktur des Monofilaments auch bei und nach dem Verdrillen und nach dem Verstrecken dauerhaft zu erhalten, wird das verstreckte Monofilament vorteilhaft auf eine mindestens 20°C unterhalb der Schmelztemperatur des thermoplastischen Kunststoffes liegende Temperatur erwärmt. Diese Temperatur dient der Einleitung der Thermofixierung des Monofilaments und ist etwas niedriger als die Temperatur gewählt, bei der das Verstrecken durchgeführt wird. Sie ist vom Fachmann ebenso wie die Temperatur zum Verstrecken in Abhängigkeit vom thermoplastischen Kunststoff und Einsatzzweck individuell auszuwählen und kann im Falle eines Monofilaments auf Basis von Polyamid z. B. 80 bis 200°C betragen.

Um ein besonders rationelles Herstellungsverfahren zu ermöglichen, wird erfindungsgemäß ferner vorgeschlagen, daß das Monofilament z. B. mit der bereits erwähnten Zwirnmaschine kontinuierlich verdrillt wird, d. h. kontinuierlich durch die Zwirnmaschine geführt und gleichzeitig verdrillt wird.

Die einzelnen Arbeitsgänge Extrudieren, Verstrecken, Erwärmen, Verdrillen und Abkühlen des Monofilaments werden separat durchgeführt.

Zur Schaffung weiterer vorteilhafter mechanischer Eigenschaften kann überdies vorgesehen sein, das Monofilament nach dem Verdrillen und Abkühlen zu tempern, damit Feuchtigkeit vom Monofilament aufgenommen wird. Dieses Tempern kann beispielsweise in einem Wasserbad von 40 bis 80°C während 30 bis 600 s durchgeführt werden. Das Tempern kann alternativ auch in einem Temperraum mit Luft von möglichst hohem Feuchtigkeitsgehalt, z. B. 90% oder mehr und einer Temperatur von 30°C oder darüber durchgeführt werden. Im Falle des durchzuführenden Temperns ist es möglich, diesen Verfahrensschritt im Anschluß an das Verdrillen und Abkühlen des Monofilaments inline, d. h. kontinuierlich aufeinanderfolgend durchzuführen, so daß ein sehr rationelles Herstellungsverfahren geschaffen wird. Selbstverständlich ist das Tempern aber auch als separater Arbeitsgang durchführbar.

Je nach Einsatzzweck kann mit dem erfindungsgemäßen Verfahren ein Monofilament mit einem Durchmesser des Grundquerschnittes von 0,5 bis 10 mm und einer Höhe des mindestens einen Wulstes von 0,1 bis 10 mm extrudiert werden.

Das mit dem erfindungsgemäßen Verfahren herstellbare Monofilament kann beispielsweise auf Basis von Polytetrafluorethylen, Polyester, Polyamid, Copolyamid oder Polypropylen hergestellt werden. Ferner ist es auch möglich, das Monofilament aus einem biodegradablen Polymer herzustellen, wie es beispielsweise in der DE 198 17 883 C1 beschrieben ist, auf deren Offenbarungsgehalt hier ausdrücklich Bezug genommen wird. Es ist ferner möglich, Monofilamente aus vorteilhaften Mischungen und oder weiteren Komponenten gemäß dem erfindungsgemäßen Verfahren herzustellen.

Das im Rahmen des erfindungsgemäßen Verfahren herstellbare Monofilament kann ferner verschiedenste Querschnitte aufweisen, beispielsweise solche, die punktsymmetrisch zur Längsachse oder auch solche, die punktunsymmetrisch zur Längsachse ausgebildet sind. Der Grundquerschnitt des Monofilaments ist vorteilhaft kreisförmig, kann aber auch oval oder mehreckig ausgebildet sein.

Die nach dem erfindungsgemäßen Verfahren hergestellten Monofilamente sind aufgrund ihrer hohen mechanischen Festigkeit und der erzielten Oberflächenprofilierung in Form des mindestens einen wendelförmig umlaufenden Wulstes für verschiedenste Anwendungen einsetzbar.

Beispielsweise kann ein solches nach dem erfindungsgemäßen Verfahren hergestelltes Monofilament mit einem Durchmesser des Grundquerschnittes von 0,5 bis 1,6 mm als Saite für Ballspielschläger, wie Tennis- oder Squashschläger verwendet werden. Aufgrund der Verstreckung und der durch das Erwärmen des verstreckten Monofilaments vor dem Verdrillen erhaltenen Molekularstruktur weist ein solches Monofilament eine für die Spieleigenschaften vorteilhafte Elastizität auf, wobei zusätzlich die Verdrillung des Monofilaments mit dem mindestens einen wendelförmig umlaufenden Wulst dem Monofilament eine Oberflächenrauhigkeit verleiht, die es dem Spieler eines solchen Ballspielschlägers ermöglicht, den Spielball in hohe Rotation zu versetzen, was außerordentlich wünschenswert ist.

Ein weiteres Anwendungsbeispiel der nach dem erfindungsgemäßen Verfahren hergestellten Monofilamente mit einem Durchmesser des Grundquerschnittes von 1,0 bis 6 mm liegt beispielsweise in der bereits erwähnten Verwendung als Mähfaden für Freischneidegeräte. Auch bei dieser Anwendung treten die hohen Festigkeiten des nach dem erfindungsgemäßen Verfahren hergestellten Monofilaments durch besondere Verschleißfestigkeit und hohe Schnittleistung vorteilhaft zutage, wobei die Oberflächenprofilierung infolge des mindestens einen wendelförmig umlaufenden Wulstes zu einem besonders ruhigen Lauf des solchermaßen hergestellten Monofilaments als Mähfaden in einem Freischneidegerät beiträgt.

Eine dritte beispielhafte mögliche Verwendung eines nach dem erfindungsgemäßen Verfahren hergestellten Monofilaments mit einem Durchmesser des Grundquerschnittes von beispielsweise 2 bis 10 mm ist als Wuchs- und Bindedraht für Pflanzen in der Landwirtschaft zu sehen. Beispielsweise beim Hopfen- und Weinanbau werden solche Wuchs- und Bindedrähte benötigt, um die Pflanzen zu stützen bzw. ihnen ein Ranken zu ermöglichen. Hierbei bietet das nach dem erfindungsgemäßen Verfahren hergestellte Monofilament aufgrund seines wendelförmig umlaufenden Verlaufes des mindestens einen Wulstes eine hohe Oberflächenrauhigkeit, die den Pflanzen ein problemloses Klettern und Anhaften am Monofilament ermöglichen. Aufgrund der mechanischen Eigenschaften und insbesondere der Witterungsfestigkeit eines nach dem erfindungsgemäßen Verfahren hergestellten Monofilaments auf Basis eines thermoplastischen Kunststoffes ist dieses jedoch den bisher eingesetzten verzwirnten Drähten aus Metall insbesondere hinsichtlich der Wetterfestigkeit und des Gewichts überlegen.

Insbesondere bei Anwendung des nach dem erfindungsgemäßen Verfahren hergestellten Monofilaments als Mähfaden und/oder Wuchs- und Bindedraht für Pflanzen ist des weiteren auch die Herstellung des Monofilaments aus biodegradablen Polymeren besonders vorteilhaft, da es hier zu keinerlei Entsorgungsproblemen von nicht mehr benötigten Monofilamenten kommt.

Die Erfindung wird nachfolgend anhand eines Ausführungsbeispieles näher erläutert. Es zeigen:
- Figur 1: in perspektivischer Darstellung ein mit dem erfindungsgemäßen Verfahren herstellbares Monofilament vor dem Verdrillen,
- Figur 2: das Monofilament gemäß Figur 1 nach dem erfindungsgemäß durchgeführten Verdrillen,
- Figur 3: einen Querschnitt eines Monofilaments gemäß der Erfindung,
- Figur 4: eine weitere Ausführungsform eines Monofilaments gemäß der Erfindung.

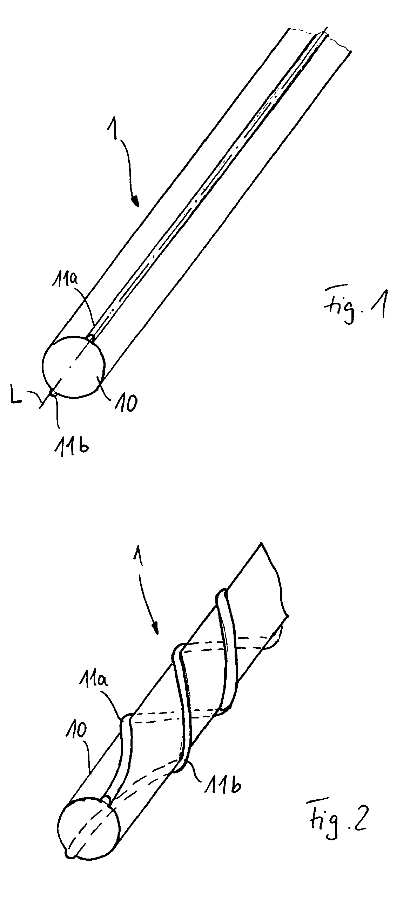

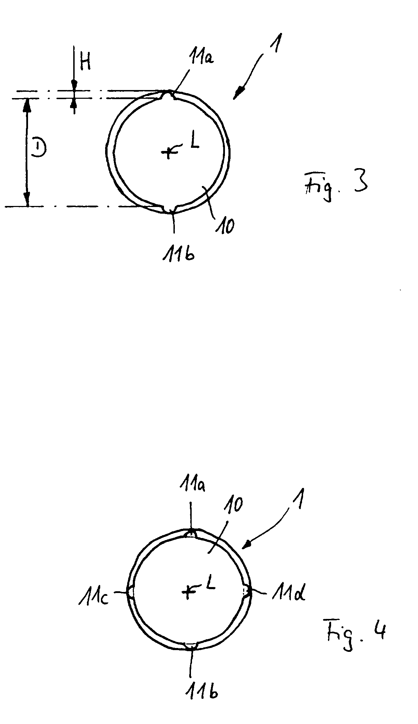

Wie aus der Darstellung gemäß Figur 1 ersichtlich, wird ein Monofilament 1 beispielsweise zur Verwendung als Mähfaden für Freischneidegeräte aus einem geeigneten thermoplastischen Kunststoff, wie Polyamid in einem ersten Schritt extrudiert. Das Monofilament 1 weist, wie in näheren Einzelheiten auch aus der Figur 3 ersichtlich, einen im wesentlichen kreisförmigen Grundquerschnitt 10 auf, der gleichzeitig den Kernbereich des Monofilaments bildet. Dieser kreisförmige Grundquerschnitt 10 weist einen Durchmesser D von etwa 1,0 bis 6 mm auf.

In Richtung der Längsachse L des Monofilaments 1 erstrecken sich ferner an diametral gegenüberliegenden Seiten des Monofilaments 1 auf dessen Oberfläche zwei Wulste 11a, 11b von im wesentlichen gleicher Gestalt, die geradlinig in Richtung der Längsachse L des Monofilaments verlaufen. Die Wulste 11a, 11b weisen hierbei beispielsweise eine Höhe H von 0,3 mm auf.

Ein solches Monofilament 1 ist mit bekannten Extrusionseinrichtungen und Werkzeugen problemlos herstellbar und kann nachfolgend zur Schaffung einer ausreichenden Festigkeit in Richtung seiner Längserstreckung bzw. Längsachse L um das beispielsweise zwei- bis zehnfache verstreckt werden.

Sodann wird das Monofilament 1 in eine hier nicht näher dargestellte, an sich jedoch bekannte Zwirnmaschine, beispielsweise eine nach dem Doppeldrahtprinzip arbeitende Zwirnmaschine eingeführt und um seine Längsachse L beispielsweise vierzigfach pro einem Meter Längserstreckung verdrillt, wodurch das Monofilament 1 die in der Figur 2 dargestellte Gestalt annimmt, bei der die beiden Wulste 11a, 11b wendelförmig auf der Oberfläche des Monofilaments 1 umlaufen.

Im Anschluß an das Verdrillen wird das solchermaßen ausgebildete verdrillte Monofilament 1 auf eine Temperatur von 80 bis 200°C,d. h. eine unterhalb der Schmelztemperatur des thermoplastischen Kunststoffes, beispielsweise Polyamid liegende Temperatur erwärmt und abgekühlt, wodurch eine Thermofixierung erzielt wird, in deren Folge das Monofilament 1 seine Gestalt mit wendelförmig umlaufenden Wulsten 11a, 11b dauerhaft beibehält, gleichzeitig aber in etwa gleiche mechanische Eigenschaften wie das unverdrillte Monofilament 1 gemäß Figur 1 aufweist.

Das gemäß Figur 2 mehrfach um seine Längsachse L verzwirnte Monofilament 1 weist somit im Endzustand wendelfömig umlaufende Wulste a, 11b auf seiner Oberfläche auf, die die vorangehend bereits erläuterte Oberflächenrauhigkeit des Monofilaments 1 bewirkt, ohne daß die Festigkeitseigenschaften des zuvor extrudierten und verstreckten Monofilaments 1 nachteilig beeinflußt würden. Im vorliegenden Beispiel eines als Mähfaden für Freischneidegeräte einzusetzenden Monofilaments 1 erhält dieses durch die Oberflächenprofilierung infolge der wendelförmig umlaufenden Wulste 11a, 11b einen besonders ruhigen Lauf bei hoher Verschleißfestigkeit.

Selbstverständlich ist es auch möglich, andere Querschnittsformen als den in den Figuren 1, 2 und 3 dargestellten Querschnitt des Monofilaments 1 mit einem kreisförmigen Grundquerschnitt 10 und zwei diametral gegenüberliegenden Wulsten a, 11b vorzusehen. So zeigt die Figur 4 einen weiteren möglichen Querschnitt eines Monofilaments 1, bei dem neben den diametral gegenüberliegenden Wulsten 11a, 11b ferner auch zwei weitere diametral gegenüberliegende Wulste 11c, 11d vorgesehen sind, so daß dieses Monofilament 1 insgesamt vier Wulste 11a bis 11d jeweils um 90° zueinander versetzt an der Oberfläche des Monofilaments 1 aufweist.

Selbstverständlich ist es im Rahmen der Erfindung auch möglich, mehr oder weniger als die gezeigte Anzahl von Wulsten am Monofilament 1 vorzusehen und dieses Monofilament 1 nach der Extrusion und Verstreckung in der beschriebenen Weise um seine Längsachse L zu verdrillen, um den gewünschten wendelförmigen Verlauf des mindestens einen Wulstes zu erhalten.

## Patentansprüche

1. Verfahren zum Herstellen eines Monofilaments aus einem extrudierbaren und verstreckbaren thermoplastischen Kunststoff mit einem Grundquer-schnitt und mindestens einem in Längserstreckung des Monofilaments auf dessen Oberfläche wendelförmig umlaufenden Wulst, umfassend die fol-genden Schritte:
a. Extrudieren des Monofilaments mit geradlinigem Verlauf des mindestens einen Wulstes in Richtung der Längserstreckung des Monofilaments;
b. Verstrecken des Monofilaments um den Faktor 1 bis 10;
c. Verdrillen des erwärmten Monofilaments um seine Längsachse unter Ausbildung des wendelförmig umlaufenden Verlaufs des mindestens einen Wulstes, wobei das Verdrillen des verstreckten Monofilaments in einem separaten und von der Extrusion und Verstreckung desselben unabhängigen Arbeitsgang durchgeführt wird, und anschließend
d. Erwärmen des verstreckten Monofilaments auf eine Temperatur unterhalb der Schmelztemperatur des thermoplastischen Kunststoffes und nachfolgendes Abkühlen, wodurch eine Thermofixierung des verdrillten Monofilaments bewirkt wird.

2. Verfahren nach Anspruch 1, **dadurch gekennzeichnet, daß** das Monofilament auf einem Meter seiner Längserstreckung zwanzig- bis zweihundertfach um seine Längsachse verdrillt wird.

3. Verfahren nach einem der Ansprüche 1 oder 2. **dadurch gekennzeichnet, daß** das Verstrecken des Monofilaments bei einer mindestens 10°C unterhalb der Schmelztemperatur des thermoplastischen Kunststoffes liegenden Temperatur durchgeführt wird.

4. Verfahren nach einem der Ansprüche 1 bis 3, **dadurch gekennzeichnet, daß** das verstreckte Monofilament auf eine mindestens 20°C unterhalb der Schmelztemperatur des thermoplastischen Kunststoffes liegende Temperatur erwärmt wird.

5. Verfahren nach einem der Ansprüche 1 bis 4, **dadurch gekennzeichnet, daß** das Monofilament infolge der beim Verdrillen hervorgerufenen Luftumströmung der Oberfläche desselben abgekühlt wird.

6. Verfahren nach einem der Ansprüche 1 bis 5, **dadurch gekennzeichnet, daß** das Monofilament kontinuierlich verdrillt wird.

7. Verfahren nach einem der Ansprüche 1 bis 6, **dadurch gekennzeichnet, daß** das Monofilament nach dem Verdrillen und Abkühlen getempert wird.

8. Verfahren nach Anspruch 7, **dadurch gekennzeichnet, daß** das Monofilament in einem Wasserbad von 40 bis 80°C während 30 bis 600 s getempert wird.

9. Verfahren nach Anspruch 7, **dadurch gekennzeichnet, daß** das Monofilament in einem Temperraum mit Luft mit 90% Luftfeuchtigkeit oder mehr und einer Temperatur über 30°C getempert wird.

10. Verfahren nach einem der Ansprüche 1 bis 9, **dadurch gekennzeichnet, daß** ein Monofilament mit einem Durchmesser (D) des Grundquerschnittes von 0,5 bis 10 mm und einer Höhe (H) des mindestens einen Wulstes von 0,1 bis 10 mm des Durchmessers (D) extrudiert wird.

11. Verfahren nach einem der Ansprüche 1 bis 10, **dadurch gekennzeichnet, daß** ein Monofilament auf Basis von Polytetrafluorethylen, Polyester, Polyamid, Copolyamid, Polypropylen und/oder biodegradablen Polymeren hergestellt wird.

12. Verfahren nach einem der Ansprüche 1 bis 11, **dadurch gekennzeichnet, daß** ein Monofilament mit einem im wesentlichen kreisförmigen Grundquerschnitt extrudiert wird.

13. Verwendung eines gemäß einem der Ansprüche 1 bis 12 hergestellten Monofilaments mit einem Durchmesser (D) des Grundquerschnittes von 0,5 bis 1,6 mm als Saite für Ballspielschläger.

14. Verwendung eines gemäß einem der Ansprüche 1 bis 12 hergestellten Monofilaments mit einem Durchmesser (D) des Grundquerschnittes von 1,0 bis 6 mm als Mähfaden für Freischneidegeräte.

15. Verwendung eines gemäß einem der Ansprüche 1 bis 12 hergestellten Monofilaments mit einem Durchmesser (D) des Grundquerschnittes von 2 bis 10 mm als Wuchs- und Bindedraht für Pflanzen.

## Claims

1. A process for the production of a monofilament from an extrudable and stretchable thermoplastic material with a basic cross section and at least one bead running helically around the surface of the monofilament in the longitudinal extent of the latter, comprising the following steps:
a. extruding the monofilament with the at least one bead running in a straight line in the direction of the longitudinal extent of the monofilament;
b. stretching the monofilament by a factor of 1 to 10;
c. twisting the heated monofilament about its longitudinal axis whilst forming the helical progression of the at least one bead, the twisting of the stretched monofilament being carried out in a separate operation that is independent of the extrusion and stretching of the same, and subsequently
d. heating the stretched monofilament to a temperature below the melting temperature of the thermoplastic material and subsequent cooling, whereby heat-setting of the twisted monofilament is brought about.

2. A process according to claim 1, **characterized in that** the monofilament is twisted 20 to 200 times about its longitudinal axis over a metre of its longitudinal extent.

3. A process according to either one of claims 1 and 2, **characterized in that** the stretching of the monofilament is carried out at a temperature lying at least 10°C below the melting temperature of the thermoplastic material.

4. A process according to any one of claims 1 to 3, **characterized in that** the stretched monofilament is heated to a temperature lying at least 20°C below the melting temperature of the thermoplastic material.

5. A process according to any one of claims 1 to 4, **characterized in that** the monofilament is cooled as a result of the air flowing around the surface of the same during the twisting.

6. A process according to any one of claims 1 to 5, **characterized in that** the monofilament is continuously twisted.

7. A process according to any one of claims 1 to 6, **characterized in that** the monofilament is annealed after the twisting and cooling.

8. A process according to claim 7, **characterized in that** the monofilament is annealed for 30 to 600 s in a water bath at from 40 to 80°C.

9. A process according to claim 7, **characterized in that** the monofilament is annealed in an annealing chamber with air at a relative humidity of 90% or more and a temperature above 30°C.

10. A process according to any one of claims 1 to 9, **characterized in that** a monofilament with a diameter (D) of the basic cross section of from 0.5 to 10 mm and a height (H) of the at least one bead of from 0.1 to 10 mm is extruded.

11. A process according to any one of claims 1 to 10, **characterized in that** a monofilament based on polytetrafluoroethylene, polyester, polyamide, copolyamide, polypropylene and/or biodegradable polymers is produced.

12. A process according to any one of claims 1 to 11, **characterized in that** a monofilament with a substantially circular basic cross section is extruded.

13. Use of a monofilament produced according to any one of claims 1 to 12 with a diameter (D) of the basic cross section of from 0.5 to 1.6 mm as a string for rackets for ball games.

14. Use of a monofilament produced according to any one of claims 1 to 12 with a diameter (D) of the basic cross section of from 1.0 to 6 mm as a cutting filament for line trimmers.

15. Use of a monofilament produced according to any one of claims 1 to 12 with a diameter (D) of the basic cross section of from 2 to 10 mm as a training and tying wire for plants.

## Revendications

1. Procédé de fabrication d'un monofilament à partir d'un matériau synthétique thermoplastique extrudable et étirable présentant une section transversale de base et au moins un bourrelet qui s'enroule en hélice dans le sens de la longueur du monofilament à sa surface, ledit procédé comprenant les étapes suivantes :
a. on effectue l'extrusion du monofilament avec un écoulement rectiligne du au moins un bourrelet dans le sens de la longueur du monofilament ;
b. on étire le monofilament du facteur 1 à 10 ;
c. on torsade le monofilament chauffé autour de son axe longitudinal en formant l'écoulement s'enroulant en hélice du au moins un bourrelet, la torsade du monofilament étiré étant réalisée dans une phase de travail séparée et indépendante de l'extrusion et de l'étirage de celui-ci, et ensuite,
d. on chauffe le monofilament étiré à une température inférieure à la température de fusion du matériau synthétique thermoplastique et on le refroidit ensuite, ce qui provoque un thermofixage du monofilament torsadé.

2. Procédé selon la revendication 1, **caractérisé en ce que** le monofilament est torsadé sur un mètre de sa longueur vingt à deux cents fois autour de son axe longitudinal.

3. Procédé selon l'une quelconque des revendications 1 et 2, **caractérisé en ce que** l'étirage du monofilament est réalisé à une température au moins 10 °C inférieure à la température de fusion du matériau synthétique thermoplastique.

4. Procédé selon l'une quelconque des revendications 1 à 3, **caractérisé en ce que** le monofilament étiré est chauffé à une température au moins 20 °C inférieure à la température de fusion du matériau synthétique thermoplastique.

5. Procédé selon l'une quelconque des revendications 1 à 4, **caractérisé en ce que** le monofilament est refroidi à la suite de l'écoulement d'air autour de sa surface, qui est provoqué par la torsade.

6. Procédé selon l'une quelconque des revendications 1 à 5, **caractérisé en ce que** le monofilament est torsadé en continu.

7. Procédé selon l'une quelconque des revendications 1 à 6, **caractérisé en ce que** le monofilament est étuvé après la torsade et le refroidissement.

8. Procédé selon la revendication 7, **caractérisé en ce que** le monofilament est étuvé au bain-marie à une température de 40 à 80 °C durant 30 à 600 s.

9. Procédé selon la revendication 7, **caractérisé en ce que** le monofilament est étuvé dans une chambre d'étuvage avec de l'air à 90 % d'humidité ou plus et à une température supérieure à 30 °C.

10. Procédé selon l'une quelconque des revendications 1 à 9, **caractérisé en ce que** l'on extrude un monofilament d'un diamètre (D) de la section transversale de base de 0,5 à 10 mm et d'une hauteur (H) du au moins un bourrelet de 0,1 à 10 mm du diamètre (D).

11. Procédé selon l'une quelconque des revendications 1 à 10, **caractérisé en ce que** l'on fabrique un monofilament à base de polytétrafluoréthylène, de polyester, de polyamide, de copolyamide, de polypropylène et/ou de polymères biodégradables.

12. Procédé selon l'une quelconque des revendications 1 à 11, **caractérisé en ce que** l'on extrude un monofilament d'une section transversale de base sensiblement circulaire.

13. Utilisation d'un monofilament fabriqué selon l'une quelconque des revendications 1 à 12 d'un diamètre (D) de section transversale de base de 0,5 à 1,6 mm comme corde pour raquettes destinées à des jeux de balle.

14. Utilisation d'un monofilament fabriqué selon l'une quelconque des revendications 1 à 12 d'un diamètre (D) de section transversale de base de 1,0 à 6 mm comme fil de coupe pour débrousailleuses.

15. Utilisation d'un monofilament fabriqué selon l'une quelconque des revendications 1 à 12 d'un diamètre (D) de section transversale de base de 2 à 10 mm comme fil de croissance et d'attache pour plantes.
